# EUROPEAN PATENT APPLICATION

(11) **EP 4 114 026 A1**
(43) Date of publication of application: **04.01.2023**
(21) Application number: 21779370.2
(22) Date of filing: 30.01.2021
(51) Int. Cl.: H04N 21/4788, H04N 21/2662, H04N 7/14

(54) **VIDEO TRANSMISSION METHOD AND SYSTEM, AND RELATED DEVICE AND STORAGE MEDIUM**

(30) Priority: 28.03.2020 CN 202010233007
(71) Applicant: Huawei Technologies Co., Ltd., Shenzhen, Guangdong 518129, (CN)
(72) Inventor: MENG, Bin, Shenzhen, Guangdong 518129 (CN); ZHANG, Yunhua, Shenzhen, Guangdong 518129 (CN); ZHU, Ye, Shenzhen, Guangdong 518129 (CN)
(74) Representative: Isarpatent
(86) International application number: PCT/CN2021/074539
(87) International publication number: WO 2021/196860

(57) **Abstract**

Embodiments of this application provide a video transmission method, system, and related device, and a storage medium. The video transmission method includes: A first session border controller receives a first video image sent by a second session border controller. The first session border controller performs super-resolution processing on the first video image to obtain a second video image, where a resolution of the second video image is higher than a resolution of the first video image. The first session border controller sends the second video image to a first terminal. In embodiments of this application, the first session border controller receives a lower-resolution first video image, and then sends a higher-resolution second video image to a terminal. This method changes an existing video call's bandwidth requirement, so that a smaller bandwidth is used in uplink, and a larger bandwidth is used in downlink, and a video call service model matches resource allocation of wireless traffic. This saves resources and reduces carriers' costs.

## Description

This application claims priority to Chinese Patent Application No. 202010233007.3, filed with the China National Intellectual Property Administration on March 28, 2020 and entitled "VIDEO TRANSMISSION METHOD, SYSTEM, AND RELATED DEVICE, AND STORAGE MEDIUM", which is incorporated herein by reference in its entirety.

### TECHNICAL FIELD

This application relates to the field of communications technologies, and in particular, to a video transmission method, a video transmission system, a video transmission device, and a storage medium.

### BACKGROUND

The mobile communications network has been evolved from 3G to 4G. The 4G network is capable of providing high-definition voice and video call services, as well as faster Internet access. With the popularization of the 4G network, various APPs are developing rapidly. Various instant messaging APPs are encroaching carriers' voice market. In a future-oriented 5G network, the instant messaging APPs provide more competitive service experience.

Facing the current competition and greater future risks, carriers need to continuously reduce costs and provide better service experience. The carriers provide two basic products for the public: traffic and phone calls. Requirements for traffic consumption increase rapidly and have become a main revenue source of the carriers. However, requirements for phone calls have become saturated. Therefore, the carriers give priority to traffic planning over phone calls during wireless network planning. Traffic and phone calls differ in a wireless network. Traffic is characterized by smaller uplink traffic and larger downlink traffic. Generally, the uplink traffic is 10% of the downlink traffic. In China, a criterion for carrier-recommended uplink traffic is 0.5 Mbps and a criterion for carrier-recommended downlink traffic is 5 Mbps. For phone calls, audio calls require 24.85 Kbps in uplink and 24.85 kbps in downlink, and video calls require 1 Mbps in uplink and 1 Mbps in downlink.

That is, when a traffic requirement of a data domain reaches a coverage criterion, the requirement of audio calls is met at the same time, while the requirement of video calls cannot be met. In addition, as a larger part of consumption of the wireless network occurs in downlink currently, the carriers will allocate more resources in downlink. However, in a telephone model, resources consumed in uplink and downlink are the same, causing a waste of resources.

### SUMMARY

This application discloses a video transmission method, system, and device, and a storage medium, so that a smaller bandwidth may be used in uplink and a larger bandwidth may be used in downlink in phone call services. In this way, a phone call service model matches resource division of wireless traffic, and costs of a carrier may be reduced.

According to a first aspect, an embodiment of this application provides a video transmission method, including:

A first session border controller receives a first video image sent by a second session border controller.

The first session border controller performs super-resolution processing on the first video image to obtain a second video image, where a resolution of the second video image is higher than a resolution of the first video image.

The first session border controller sends the second video image to a first terminal.

In embodiments of this application, the first session border controller processes the received lower-resolution first video image sent by the second session border controller, converts the lower-resolution first video image into the higher-resolution second video image, and then sends the higher-resolution second video image to the first terminal. In other words, the first session border controller receives the lower-resolution first video image, and then sends the higher-resolution second video image to a terminal. This method changes an existing video call's bandwidth requirement from using a same bandwidth in both uplink and downlink to using a smaller bandwidth in uplink and a larger bandwidth in downlink, so that a video call service model matches resource allocation of wireless traffic. This saves resources and reduces carriers' costs.

Optionally, the method further includes:

The second session border controller receives a third video image sent by the first session border controller.

The second session border controller performs super-resolution processing on the third video image to obtain a fourth video image, where a resolution of the fourth video image is higher than a resolution of the third video image.

The second session border controller sends the fourth video image to a second terminal.

In other words, both the first session border controller and the second session border controller may support super-resolution.

Optionally, the method further includes:

The first session border controller receives a third video image sent by the first terminal.

The first session border controller sends the third video image to the second session border controller.

Before the first session border controller receives the first video image sent by the second session border controller, the method further includes:

The first session border controller sends a first packet to the first terminal. The first packet carries a resolution of a video image used in a sending direction of the first session border controller, to indicate the first terminal to receive a video image sent by the first session border controller. The resolution of the video image used in the sending direction of the first session border controller is the resolution of the second video image.

Further, the method includes:
The second session border controller sends a second packet that carries super-resolution capability indication information to the second terminal, to indicate the second terminal to send a video image that meets the super-resolution capability indication information. A resolution of the video image that meets the super-resolution capability indication information is the resolution of the first video image.

In embodiments of this application, video transmission negotiation is performed before video transmission processing, so that receiving, super-resolution processing, and sending of a video image are performed based on a resolution obtained through negotiation. This improves reliability of implementing a video transmission technology.

In addition, the first session border controller processes the received lower-resolution first video image sent by the second session border controller, converts the lower-resolution first video image into the higher-resolution second video image, and then sends the higher-resolution second video image to the first terminal. This method changes an existing video call's bandwidth requirement from using a same bandwidth in both uplink and downlink to using a smaller bandwidth in uplink and a larger bandwidth in downlink, so that a video call service model matches resource allocation of wireless traffic. This saves resources and reduces carriers' costs.

The second packet is a SIP packet, and the super-resolution capability indication information is in an image attribute parameter of the SIP packet.

Alternatively, the second packet is an RTCP packet, and the RTCP packet includes a name field. When the name field corresponds to a first preset value, that the RTCP packet carries the super-resolution capability indication information is indicated.

Alternatively, the second packet is an SPS packet, and the super-resolution capability indication information is in a parameter of the SPS packet.

Further, the second packet further carries asymmetry capability indication information, and the asymmetry capability indication information indicates that the first terminal supports different resolutions in a receiving direction and a sending direction.

In the negotiation method, a step of re-negotiating by the UE 1 to determine a resolution for a sending direction of the UE 1 is omitted. This improves a resolution negotiation mechanism of the video call, simplifies a procedure, and saves bandwidth resources of air interfaces and bandwidth resources of a bearer network.

According to a second aspect, this application further provides an audio transmission method, including:

A first session border controller receives first audio sent by a second session border controller.

The first session border controller performs super-resolution processing on the first audio to obtain second audio, where a bit rate of the second audio is higher than a bit rate of the first audio.

The first session border controller sends the second audio to a first terminal.

In embodiments of this application, the first session border controller processes a received low bit rate audio, converts the low bit rate audio into a high bit rate audio, and then sends the high bit rate audio to a terminal. This method changes an existing audio call's bandwidth requirement from using a same bandwidth in both uplink and downlink to using a smaller bandwidth in uplink and a larger bandwidth in downlink, so that an audio call service model matches resource allocation of wireless traffic. This saves resources and reduces carriers' costs.

The method further includes:
The second session border controller receives third audio sent by the first session border controller.

The second session border controller performs super-resolution processing on the third audio to obtain fourth audio, where a bit rate of the fourth audio is higher than a bit rate of the third audio.

The second session border controller sends the fourth audio to a second terminal.

In other words, both the first session border controller and the second session border controller may implement super-resolution.

The method further includes:
The first session border controller receives third audio sent by the first terminal.

The first session border controller sends the third audio to the second session border controller.

Further, before the first session border controller receives the first audio sent by the second session border controller, the method further includes:

The first session border controller sends a first packet to the first terminal. The first packet carries a bit rate of audio used in a sending direction of the first session border controller, to indicate the first terminal to receive audio sent by the first session border controller. The bit rate of the audio used in the sending direction of the first session border controller is the bit rate of the second audio.

The method further includes:
The second session border controller sends a second packet that carries super-resolution capability indication information to the second terminal, to indicate the second terminal to send audio that meets the super-resolution capability indication information. A bit rate of the audio that meets the super-resolution capability indication information is the bit rate of the first audio.

In embodiments of this application, audio transmission negotiation is performed before audio transmission processing, so that receiving, super-resolution processing, and sending of audio are performed based on a bit rate obtained through negotiation. This improves reliability of implementing an audio transmission technology.

In addition, the first session border controller processes a received low bit rate audio, converts the low bit rate audio into a high bit rate audio, and then sends the high bit rate audio to the terminal. This method changes an existing audio call's bandwidth requirement from using a same bandwidth in both uplink and downlink to using a smaller bandwidth in uplink and a larger bandwidth in downlink, so that an audio call service model matches resource allocation of wireless traffic. This saves resources and reduces carriers' costs.

Optionally, the second packet is a SIP packet, and the super-resolution capability indication information is in the SIP packet.

Alternatively, the second packet is an RTCP packet, and the RTCP packet includes a name field. When the name field corresponds to a first preset value, that the RTCP packet carries the super-resolution capability indication information is indicated.

Alternatively, the second packet is an SPS packet, and the super-resolution capability indication information is in a parameter of the SPS packet.

Further, the second packet further carries asymmetry capability indication information, and the asymmetry capability indication information indicates that the first terminal supports different bit rates in a receiving direction and a sending direction.

In embodiments of this application, audio transmission negotiation is performed before audio transmission processing, so that receiving, super-resolution processing, and sending of audio are performed based on a bit rate obtained through negotiation. This improves reliability of implementing an audio transmission technology. In addition, in the negotiation method, a step of re-negotiating by the UE 1 to determine a bit rate for a sending direction of the UE 1 is omitted. This improves an encoding and decoding speed negotiation mechanism of the audio call, simplifies a procedure, and saves bandwidth resources of air interfaces and bandwidth resources of a bearer network.

In addition, the first session border controller processes a received low bit rate audio, converts the low bit rate audio into a high bit rate audio, and then sends the high bit rate audio to the terminal. This method changes an existing audio call's bandwidth requirement from using a same bandwidth in both uplink and downlink to using a smaller bandwidth in uplink and a larger bandwidth in downlink, so that an audio call service model matches resource allocation of wireless traffic. This saves resources and reduces carriers' costs.

According to a third aspect, an embodiment of this application provides a multimedia data transmission method, mainly including:

A terminal sends a multimedia request message to a network side device. The multimedia request message carries asymmetry capability indication information. The asymmetry capability indication information indicates that the terminal supports different bit rates or resolutions in a receiving direction and a sending direction.

The terminal receives a multimedia response message sent by the network side device. The multimedia response message carries an uplink resolution and a downlink resolution or an uplink bit rate and a downlink bit rate.

The terminal sends uplink multimedia data using the uplink resolution or the uplink bit rate, and receives downlink multimedia data transmitted using the downlink resolution or the downlink bit rate.

In a possible solution, the multimedia request message is an invite message, and the asymmetry capability indication information is in an SDP field of the invite message.

In a possible solution, the multimedia request message is an RTCP packet, and the RTCP packet carries the asymmetry capability indication information.

In a possible solution, the multimedia request message is an SPS packet, and the SPS packet carries the asymmetry capability indication information.

In a possible solution, the network side device receives the multimedia request message of the terminal, and determines, based on the asymmetry capability indication information carried in the multimedia request message, the uplink resolution and the downlink resolution or the uplink bit rate and the downlink bit rate that are used by the terminal to transmit the multimedia data. Then, the network side device sends the multimedia response message to the terminal, where the multimedia response message carries the uplink resolution and the downlink resolution or the uplink bit rate and the downlink bit rate that are used to transmit the multimedia data.

In a possible solution, the network side device is a first SBC.

In a possible solution, the multimedia data is audio data or video data.

According to a fourth aspect, this application further provides a video transmission method, including:
A first terminal receives a second video image sent by a first session border controller, where the second video image is obtained by the first session border controller by performing super-resolution processing on a first video image. The first video image is sent by a second session border controller to the first session border controller, and a resolution of the second video image is higher than a resolution of the first video image.

The method further includes:
A second terminal receives a fourth video image sent by the second session border controller, where the fourth video image is obtained by the second session border controller by performing super-resolution processing on a third video image. The third video image is sent by the first session border controller to the second session border controller, and a resolution of the fourth video image is higher than a resolution of the third video image.

Before the first terminal receives the second video image sent by the first session border controller, the method further includes:
The first terminal receives a first packet sent by the first session border controller. The first packet carries a resolution of a video image used in a sending direction of the first session border controller, so that the first terminal receives a video image sent by the first session border controller. The resolution of the video image used in the sending direction of the first session border controller is the resolution of the second video image.

The method further includes:
The second terminal receives a second packet that is sent by the second session border controller and that carries super-resolution capability indication information.

The second terminal sends a video image that meets the super-resolution capability indication information to the second session border controller. A resolution of the video image that meets the super-resolution capability indication information is the resolution of the first video image.

According to a fifth aspect, this application further provides a video transmission system, including a first session border controller and a second session border controller, where the first session border controller is configured to:
receive a first video image sent by the second session border controller;
perform super-resolution processing on the first video image to obtain a second video image, where a resolution of the second video image is higher than a resolution of the first video image; and
send the second video image to a first terminal.

The second session border controller is configured to:
receive a third video image sent by the first session border controller;
perform super-resolution processing on the third video image to obtain a fourth video image, where a resolution of the fourth video image is higher than a resolution of the third video image; and
send the fourth video image to a second terminal.

The first session border controller is further configured to:
receive a third video image sent by the first terminal; and
send the third video image to the second session border controller.

The first session border controller is further configured to:
send a first packet to the first terminal. The first packet carries a resolution of a video image used in a sending direction of the first session border controller, to indicate the first terminal to receive a video image sent by the first session border controller. The resolution of the video image used in the sending direction of the first session border controller is the resolution of the second video image.

The second session border controller is further configured to:
send a second packet that carries super-resolution capability indication information to the second terminal, to indicate the second terminal to send a video image that meets the super-resolution capability indication information. A resolution of the video image that meets the super-resolution capability indication information is the resolution of the first video image.

According to a sixth aspect, this application further provides an audio transmission system, including a first session border controller and a second session border controller, where the first session border controller is configured to:
receive first audio sent by the second session border controller;
performs super-resolution processing on the first audio to obtain second audio, where a bit rate of the second audio is higher than a bit rate of the first audio; and
send the second audio to a first terminal.

The second session border controller is configured to:
receive third audio sent by the first session border controller;
performs super-resolution processing on the third audio to obtain fourth audio, where a bit rate of the fourth audio is higher than a bit rate of the third audio; and
send the fourth audio to a second terminal.

The first session border controller is further configured to:
receive third audio sent by the first terminal; and
send the third audio to the second session border controller.

The first session border controller is further configured to:
send a first packet to the first terminal. The first packet carries a bit rate of audio used in a sending direction of the first session border controller, to indicate the first terminal to receive audio sent by the first session border controller. The bit rate of the audio used in the sending direction of the first session border controller is the bit rate of the second audio.

The second session border controller is further configured to:
send a second packet that carries super-resolution capability indication information to the second terminal, to indicate the second terminal to send audio that meets the super-resolution capability indication information. A bit rate of the audio that meets the super-resolution capability indication information is the bit rate of the first audio.

According to a seventh aspect, this application provides a transmission device. The video transmission device is configured to perform the method according to any one of the possible implementations of the first aspect and/or any one of the possible implementations of the second aspect and/or the method according to any one of the possible implementations of the third aspect and/or the method according to any one of the possible implementations of the fourth aspect.

According to an eighth aspect, this application provides a computer storage medium, including computer instructions. When the computer instructions run on an electronic device, the electronic device is enabled to perform the method according to any one of the possible implementations of the first aspect and/or any one of the possible implementations of the second aspect and/or the method according to any one of the possible implementations of the third aspect and/or the method according to any one of the possible implementations of the fourth aspect.

According to a ninth aspect, an embodiment of this application provides a computer program product. When the computer program product runs on a computer, the computer is enabled to perform the method according to any one of the possible implementations of the first aspect and/or any one of the possible implementations of the second aspect and/or the method according to any one of the possible implementations of the third aspect and/or the method according to any one of the possible implementations of the fourth aspect.

According to a tenth aspect, an embodiment of this application provides a video transmission device, including a memory and a processor that are coupled to each other. The memory stores computer program code, and the processor invokes and executes the computer program code in the memory, to enable the video transmission device to perform the video/audio transmission method according to the first aspect and/or the second aspect.

According to an eleventh aspect, an embodiment of this application provides a terminal, including a display, an input/output interface, and a memory and a processor that are coupled to each other. The memory stores computer program code, and the processor invokes and executes the computer program code in the memory, to enable the terminal to perform the multimedia data transmission method according to the third aspect and/or the fourth aspect.

It may be understood that the apparatus according to the fifth aspect, the apparatus according to the sixth aspect, the apparatus according to the seventh aspect, the computer storage medium according to the eighth aspect, the computer program product according to the ninth aspect, the device according to the tenth aspect, and the terminal according to the eleventh aspect are all configured to perform the method according to any one of the first aspect, the method according to any one of the second aspect, the method according to any one of the third aspect, and the method according to any one of the fourth aspect. Therefore, for beneficial effects that can be achieved, refer to beneficial effects in a corresponding method. Details are not described herein again.

### BRIEF DESCRIPTION OF DRAWINGS

The following describes the accompanying drawings used in embodiments of this application.
FIG. 1 is a schematic diagram of a video transmission system according to an embodiment of this application;
FIG. 2 is a schematic flowchart of a video transmission method according to an embodiment of this application;
FIG. 3 is a schematic diagram of a structure of a packet according to an embodiment of this application;
FIG. 4 is a schematic diagram of a structure of a packet according to an embodiment of this application;
FIG. 5 is a schematic flowchart of video transmission negotiation processing according to an embodiment of this application;
FIG. 6 is a schematic flowchart of another video transmission negotiation processing according to an embodiment of this application;
FIG. 7 is a schematic flowchart of still another video transmission negotiation processing according to an embodiment of this application;
FIG. 8 is a schematic flowchart of yet another video transmission negotiation processing according to an embodiment of this application;
FIG. 9 is a schematic flowchart of audio transmission negotiation processing according to an embodiment of this application;
FIG. 10 is a schematic diagram of a structure of a video transmission device according to an embodiment of this application; and
FIG. 11 is a schematic diagram of a structure of a terminal according to an embodiment of this application.

### DESCRIPTION OF EMBODIMENTS

The following describes embodiments of this application with reference to the accompanying drawings in embodiments of this application. Terms used in implementations of embodiments of this application are merely used to explain specific embodiments of this application, and are not intended to limit this application.

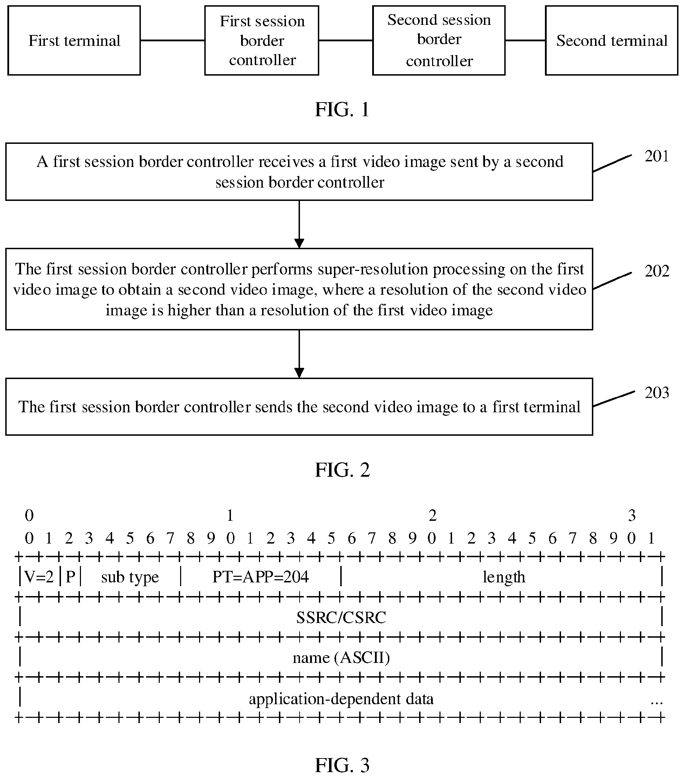

FIG. 1 is a schematic diagram of a video transmission system according to an embodiment of this application. The video transmission system may include a first terminal UE 1, a second terminal UE 2, a first session border controller SBC 1, and a second session border controller SBC 2. The first session border controller SBC 1 may be configured to receive a video image sent by the second session border controller, and send the video image to the first terminal UE 1. The second session border controller SBC 2 may be configured to receive the video image sent by the first session border controller, and send the video image to the second terminal UE 2.

Further, the first session border controller SBC 1 may be further configured to receive a video session request sent by the first terminal UE 1, and send the video session request to the second session border controller SBC 2. The second session border controller SBC 2 may be configured to receive the video session request sent by the first session border controller SBC 1, and send the video session request to the second terminal UE 2. The second session border controller SBC 2 may further receive a message sent by the second terminal UE 2, and forward the message to the first session border controller SBC 1. The first session border controller SBC 1 may be configured to receive the message sent by the second session border controller SBC 2, and forward the message to the first terminal UE 1.

The SBC 1 and the SBC 2 may be a same SBC. For example, the UE 1 and the UE 2 are in a same cell or city.

FIG. 2 is a schematic flowchart of a video transmission method according to an embodiment of this application. The video transmission method includes 201 to 203, which are specifically as follows.

201: A first session border controller receives a first video image sent by a second session border controller.

The video transmission method may be applied to a video transmission system, where the video transmission system may include a first terminal UE 1, a first session border controller SBC 1, a second session border controller SBC 2, and a second terminal UE 2.

Specifically, the second terminal UE 2 sends the first video image to the second session border controller SBC 2, and the second session border controller SBC 2 forwards the first video image to the first session border controller SBC 1.

202: The first session border controller performs super-resolution processing on the first video image to obtain a second video image, where a resolution of the second video image is higher than a resolution of the first video image.

The first session border controller supports super-resolution. In other words, the first session border controller may increase a resolution of a received video image.

The super-resolution is that a lower-resolution video is restored to a higher-resolution video through mathematical operations, or a lower-quality audio is restored to a higher-quality audio through mathematical operations.

The first session border controller processes the lower-resolution first video image to obtain the higher-resolution second video image.

203: The first session border controller sends the second video image to the first terminal.

The video transmission method may be applied to a video call scenario.

In embodiments of this application, the first session border controller processes the received lower-resolution first video image sent by the second session border controller, converts the lower-resolution first video image into the higher-resolution second video image, and then sends the higher-resolution second video image to the first terminal. In other words, the first session border controller receives the lower-resolution first video image, and then sends the higher-resolution second video image to the terminal. This method changes an existing video call's bandwidth requirement from using a same bandwidth in both uplink and downlink to using a smaller bandwidth in uplink and a larger bandwidth in downlink, so that a video call service model matches resource allocation of wireless traffic. This saves resources and reduces carriers' costs.

The first session border controller and the second session border controller in this embodiment of this application may be a same device. In this case, the first session border controller may receive the first video image sent by the second terminal.

The foregoing describes an example in which the first session border controller performs super-resolution processing. Further, the second session border controller may alternatively support the super-resolution processing, and the method may further include:

The second session border controller receives a third video image sent by the first session border controller.

The second session border controller performs super-resolution processing on the third video image to obtain a fourth video image, where a resolution of the fourth video image is higher than a resolution of the third video image.

The second session border controller sends the fourth video image to the second terminal.

The UE 1 sends the third video image to the first session border controller, and the first session border controller sends the third video image to the second session border controller. The second session border controller supports the super-resolution. The second session border controller performs super-resolution processing on the third video image to obtain the fourth video image, and then the second session border controller sends the fourth video image to the UE 2, to complete the super-resolution processing.

Further, the method may include:
The first session border controller receives the third video image sent by the first terminal.

The first session border controller sends the third video image to the second session border controller.

In this embodiment, the video image sent by the UE 1 may be directly forwarded to the second session border controller through the first session border controller, so that the second session border controller may perform super-resolution processing.

As a specific implementation of the video transmission method, before the method shown in FIG. 2 is performed, the method further includes performing video transmission negotiation processing to determine the resolution of the first video image and the resolution of the second video image. A schematic flowchart of a video transmission method is provided by an embodiment of this application. The video transmission method includes A1 to A5, which are specifically as follows.

A1: A first session border controller sends a first packet to a first terminal. The first packet carries a resolution of a video image used in a sending direction of the first session border controller, to indicate the first terminal to receive a video image sent by the first session border controller. The resolution of the video image used in the sending direction of the first session border controller is a resolution of a second video image.

A2: A second session border controller sends a second packet that carries super-resolution capability indication information to a second terminal, to indicate the second terminal to send a video image that meets the super-resolution capability indication information. A resolution of the video image that meets the super-resolution capability indication information is a resolution of a first video image.

The foregoing super-resolution capability indication information may be information that the first session border controller supports super-resolution processing. For example, the information may include that the first session border controller supports conversion of a received video image with a resolution of 180^{∗}320 into a video image with a resolution of 360^{∗}640 in a receiving direction. The information may further include that the first session border controller supports conversion of the video image with the resolution of 180^{∗}320 into the video image with the resolution of 360^{∗}640 in a sending direction, and the like.

The second packet that carries the super-resolution capability indication information may be a packet that is sent by the first session border controller to the second session border controller and that is directly forwarded by the second session border controller, and the super-resolution capability indication information is information indicating that the first session border controller supports the super-resolution processing.

The video transmission negotiation processing is completed by performing steps A1 and A2, where the resolution of the video image sent by the second session border controller to the first session border controller and the resolution of the video image sent by the first session border controller to the first terminal are determined.

Based on this, video transmission may be further implemented by performing steps A3 to A5.

A3: The first session border controller receives the first video image sent by the second session border controller.

Specifically, the second terminal UE 2 sends the first video image to the second session border controller SBC 2, and the second session border controller SBC 2 forwards the first video image to the first session border controller SBC 1.

A4: The first session border controller performs super-resolution processing on the first video image to obtain the second video image, where the resolution of the second video image is higher than the resolution of the first video image.

The first session border controller supports super-resolution. In other words, the first session border controller may increase a resolution of a received video image.

The first session border controller processes the lower-resolution first video image to obtain the higher-resolution second video image.

A5: The first session border controller sends the second video image to the first terminal.

In this embodiment of this application, video transmission negotiation is performed before video transmission processing, so that receiving, super-resolution processing, and sending of a video image are performed based on a resolution obtained through negotiation. This improves reliability of implementing a video transmission technology.

In addition, the first session border controller processes the received lower-resolution first video image sent by the second session border controller, converts the lower-resolution first video image into the higher-resolution second video image, and then sends the higher-resolution second video image to the first terminal. This method changes an existing video call's bandwidth requirement from using a same bandwidth in both uplink and downlink to using a smaller bandwidth in uplink and a larger bandwidth in downlink, so that a video call service model matches resource allocation of wireless traffic. This saves resources and reduces carriers' costs.

The packet for video transmission negotiation processing may be a session initiation protocol (session initiation protocol, SIP) packet. If the second packet is a SIP packet, the super-resolution capability indication information may be in an image attribute parameter of the SIP packet. A format of a parameter imageattr is as follows:

```
          a=imageattr: PT send [x, y, sar, par, q].../recv [x, y, sar, par, q]...
```

As shown in Table 1, an amplification group identity ampid is added to the parameter imageattr, and the amplification group identity ampid indicates a super-resolution capability group of a current resolution. In other words, the amplification group identity ampid is the super-resolution capability indication information.

**Table 1**

| Character | x | y | sar | par | q | ampid |
|---|---|---|---|---|---|---|
| Meaning | Image length | Image width | Image stretch ratio | Image aspect ratio | Recommendation degree, with a range of [0, 1] | Indicate a super-resolution capability group of a current resolution. When there are multiple resolutions in a group, it represents that enhancing a lower resolution to a higher resolution in the same group through super-resolution is supported. The parameter is an optional parameter. |

When there are multiple resolutions in a group, it represents that enhancing a lower resolution to a higher resolution in the same group through super-resolution is supported.

For example, when UE or an SBC supports in enhancing a resolution of a video image from 320^{∗}180 to 640^{∗}360, and from 320^{∗}240 to 640^{∗}480 in a receiving direction, descriptions are as follows:

```
          a=imageattr: PT send ∗∗∗/recv[180, 320, ampid=1][360, 640, ampid=1]
          [240, 320, ampid=2] [480, 640, ampid=2]
```

For example, when the UE or the SBC supports in enhancing the resolution of the video image from 320^{∗}180 to 640^{∗}360, and from 640^{∗}360 to 1280^{∗}720 in the receiving direction, descriptions are as follows:

```
          a=imageattr: PT send ∗∗∗/recv[180,
320, ampid=1][360, 640, ampid=1, 2][720, 1280, ampid=2]
```

In this embodiment of this application, the amplification group identity ampid is added to the image attribute parameter imageattr of the SIP packet, to indicate the super-resolution capability indication information. This can implement negotiation on a signaling plane.

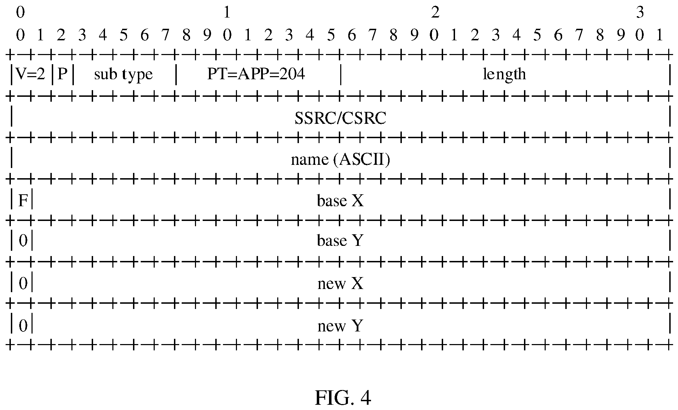

Alternatively, the foregoing negotiation may alternatively be performed on a media plane. The packet for video transmission negotiation processing may be an RTCP packet. If the second packet is a real-time transport protocol (Real-time Transport Control Protocol, RTCP) packet, the RTCP packet includes a name field. When the name field corresponds to a first preset value, it indicates that the RTCP packet carries the super-resolution capability indication information. Specifically, as shown in FIG. 3, the RTCP packet includes a subtype field, the name field, and a PT field. When a value of the PT field is 204, a value of the subtype field is 1, and the name field is changeimage-size, it indicates that the RTCP packet further carries the super-resolution capability indication information. The foregoing values are merely an example, and specific values are not limited. As shown in FIG. 4, the super-resolution capability indication information is obtained by obtaining Application-dependent data information in the packet. In this embodiment of this application, negotiation may be completed on a media plane by extending an RTCP packet on a signaling plane.

Alternatively, the packet for processing video transmission negotiation may be a sequence parameter set (sequence parameter set, SPS) packet. If the second packet is an SPS packet, the super-resolution capability indication information is in a parameter of the SPS packet. An SPS parameter in H.264 codec may carry a resolution of an image. In this embodiment of this application, the super-resolution capability indication information may be carried by extending the SPS parameter.

The extended parameters are S_pic_width_in_mbs_minus1 and S_pic_height_in_map_units_minus1. The two parameters indicate the width of a picture in units of macroblocks and the height of the picture in units of macroblocks respectively. The parameters are used to notify a peer end that an image received by a local end may be synthesized through super-resolution based on the resolution. In this embodiment, the super-resolution capability indication information is carried by extending the SPS parameter.

The following specifically describes a specific process of video transmission negotiation processing by using an example in which the super-resolution capability indication information is in the image attribute parameter of the SIP packet.

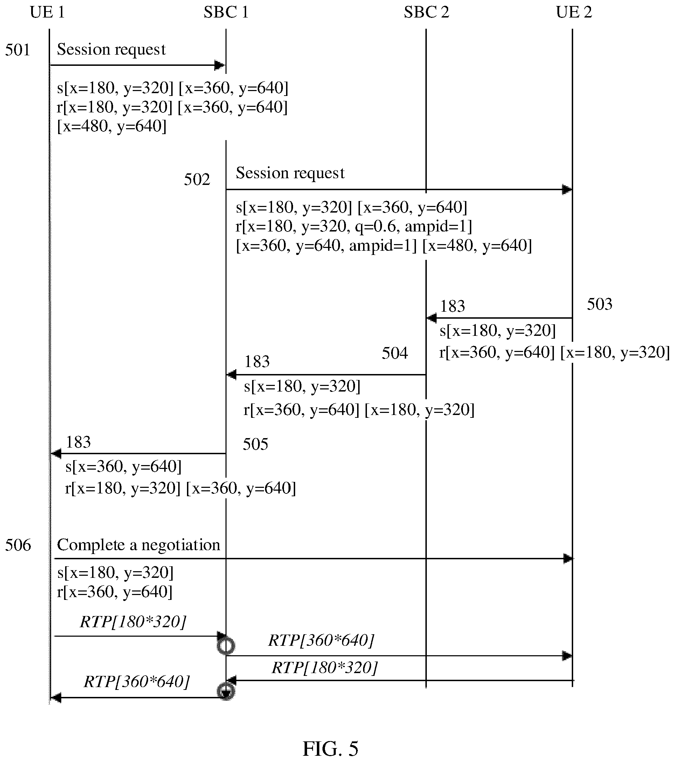

As an implementation, when only a session border controller SBC 1 on a calling side supports super-resolution, as shown in FIG. 5, the video transmission negotiation processing includes steps 501 to 506, which are specifically as follows:
501: User equipment UE 1 sends a packet to a first session border controller SBC 1 to initiate a video session request.

The session request may be an invite message. The message carries resolutions of a video image supported by the UE 1 in a receiving direction and resolutions of a video image supported by the UE 1 in a sending direction. As shown in FIG. 3, all the resolutions supported by the UE 1 in the receiving direction include 180^{∗}320, 360^{∗}640, and 480^{∗}640, and all the resolutions supported by the UE 1 in the sending direction include 180^{∗}320 and 360^{∗}640.

502: After receiving the invite message, the first session border controller SBC 1 processes the invite message based on the resolutions supported by the UE 1 that are carried in the invite message and resolutions supported by the SBC 1, to obtain an updated invite message. The SBC 1 sends the updated invite message to a second terminal UE 2 via a second session border controller SBC 2.

The first session border controller SBC 1 supports the super-resolution, that is, supports improvement of a resolution of a received video image. The processing the invite message includes adding super-resolution capability indication information supported by the first session border controller to the invite message. As shown in FIG. 3, the SBC 1 sends an updated packet to the second terminal UE 2 via the second session border controller SBC 2. The updated packet is used to notify that an SBC 1 on a called side supports in enhancing the resolution from 180^{∗}320 to 360^{∗}640 through super-resolution of in a receiving direction.

503: The second terminal UE 2 sends a first session progress response message to the second session border controller SBC 2.

The UE 2 makes a response based on the indication in the packet that the SBC 1 on the called side supports in enhancing the resolution from 180^{∗}320 to 360^{∗}640 through super-resolution in the receiving direction. The first session progress response message carries information indicating that the UE 2 supports a low resolution 180^{∗}320 in a sending direction, and supports 180^{∗}320 and 360^{∗}640 in a receiving direction.

504: After receiving the first session progress response message, the second session border controller SBC 2 forwards the first session progress response message to the first session border controller SBC 1.

After receiving the first session progress response message, the second session border controller SBC 2 may learn, based on the second packet, that the SBC 1 supports the super-resolution. Because the SBC 2 does not support the super-resolution, the SBC 2 does not process the first session progress response message, but directly forwards the first session progress response message to the SBC 1.

505: The first session border controller SBC 1 processes the first session progress response message to obtain a second session progress response message, and sends the second session progress response message to the first terminal UE 1.

After receiving the first session progress response message, the first session border controller SBC 1 learns that the UE 2 supports the low resolution 180^{∗}320 in the sending direction, and supports 180^{∗}320 and 360^{∗}640 in the receiving direction. The SBC 1 determines that a highest resolution 360^{∗}640 is selected in a sending direction of the SBC 1. Because the SBC 1 cannot determine which resolution of a video image sent by the UE 1 is, the SBC 1 adjusts resolutions in the receiving direction of the SBC 1 to 180^{∗}320 and 360^{∗}640. The SBC 1 obtains the second session progress response message by adjusting a resolution in a downlink direction in the first session progress response message.

506: The first terminal UE 1 sends a third packet to the UE 2 based on the second session progress response message, to complete the video transmission negotiation processing.

Because the SBC 1 cannot determine which resolution of the video image sent by the UE 1 is, the UE 1 selects a resolution in the receiving direction in the second session progress response message. The UE 1 selects a low resolution 180^{∗}320 for sending. The UE 1 completes the video transmission negotiation processing by sending an update message.

A result obtained by the video transmission negotiation processing is that the UE 1 sends a video image with the low resolution 180^{∗}320 to the SBC 1, so that the SBC 1 performs super-resolution processing on the video image with the resolution 180^{∗}320 to obtain a video image with a resolution 360^{∗}640, and then sends the video image with the resolution 360^{∗}640 to the UE 2 via the SBC 2. The result obtained by the video transmission negotiation processing further includes: The UE 2 sends the video image with the low resolution 180^{∗}320 to the SBC 1 via the SBC 2, so that the SBC 1 performs super-resolution processing on the video image with the resolution 180^{∗}320 to obtain the video image with the resolution 360^{∗}640, and then sends the video image with the resolution 360^{∗}640 to the UE 1.

In other words, through the foregoing video transmission negotiation processing, a resolution of a video image on which super-resolution processing is performed is determined. Then, super-resolution processing may be performed.

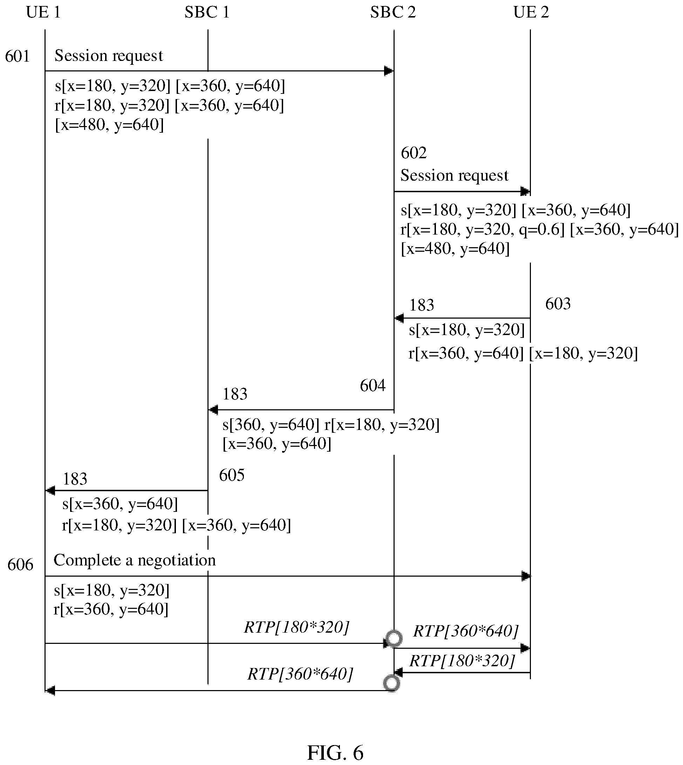

As another implementation, when only a session border controller SBC 2 on a called side supports super-resolution, as shown in FIG. 6, the video transmission negotiation processing includes steps 601 to 606, which are specifically as follows:
601: User terminal UE 1 sends a video session request to a second session border controller SBC 2 via a first session border controller SBC 1. The session request may be an invite message. The message carries resolutions of a video image supported by the UE 1 in a receiving direction and resolutions of a video image supported by the UE 1 in a sending direction. As shown in FIG. 6, the resolutions supported by the UE 1 in the receiving direction include 180^{∗}320, 360^{∗}640, and 480^{∗}640, and the resolutions supported by the UE 1 in the sending direction include 180^{∗}320 and 360^{∗}640.

The SBC 1 does not support the super-resolution, and may directly forward a packet to the second session border controller SBC 2 without adjusting the packet.

602: After receiving the invite message, the second session border controller SBC 2 processes the invite message to obtain an updated invite message, and sends the updated invite message to UE 2.

The second session border controller SBC 2 supports the super-resolution. Therefore, the SBC 2 adds super-resolution capability indication information supported by the SBC 2 to the invite message. Specifically, as shown in FIG. 6, the SBC 2 indicates, by updating the packet, the UE 2 that a resolution in a receiving direction of the UE 2 is 180^{∗}320 preferentially.

603: The second terminal UE 2 sends a first session progress response message to the second session border controller SBC 2.

The UE 2 makes a response based on the indication in the invite message that the SBC 2 preferentially supports the resolution 180^{∗}320 in the receiving direction. The first session progress response message carries information indicating that the UE 2 supports a low resolution 180^{∗}320 in a sending direction, and supports 180^{∗}320 and 360^{∗}640 in the receiving direction.

604: After receiving the first session progress response message, the second session border controller SBC 2 processes the first session progress response message to obtain a second session progress response message, and sends the second session progress response message to the first session border controller SBC 1.

After receiving the first session progress response message, the second session border controller SBC 2 may learn, based on a packet sent by the UE 1, that the SBC 1 does not support the super-resolution. Because the SBC 2 supports the super-resolution, the SBC 2 adjusts a resolution of the sending direction in the first session progress response message to a high resolution 360^{∗}640, where resolutions in the receiving direction are 180^{∗}320 and 360^{∗}640.

605: The first session border controller SBC 1 processes the second session progress response message to obtain a third session progress response message, and sends the third session progress response message to the first terminal UE 1.

After receiving the second session progress response message, the first session border controller SBC 1 learns that the SBC 2 supports the high resolution 360^{∗}640 in the sending direction. The SBC 1 determines that a resolution of the sending direction of the SBC 1 to the UE 1 is the high resolution 360^{∗}640. Because the SBC 1 cannot determine which resolution of a video image sent by the UE 1 is, the SBC 1 selects resolutions in the receiving direction of the SBC 1 to 180^{∗}320 and 360^{∗}640.

606: The first terminal UE 1 sends a negotiation completion message to the UE 2 to complete the video transmission negotiation processing.

The UE 1 selects a low resolution 180^{∗}320 for sending. The UE 1 completes the video transmission negotiation processing by sending an update message.

A negotiation result is that the UE 1 sends a low-resolution video image to the SBC 2, and the SBC 2 may send a high-resolution video image to the UE 2. In addition, the UE 2 may alternatively send the low-resolution video image to the SBC 2, and the SBC 2 may send the high-resolution video image to the UE 1.

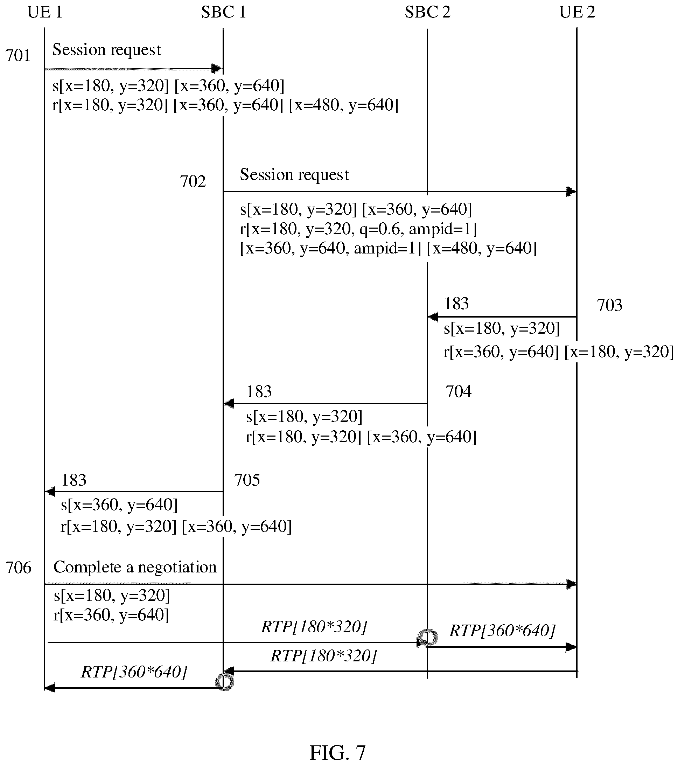

As still another implementation, when session border controllers of both a calling side and a called side support super-resolution, as shown in FIG. 7, the video transmission negotiation processing includes steps 701 to 706, which are specifically as follows:
701: User equipment UE 1 sends a video session request to a first session border controller SBC 1.

The session request may be an invite message. The message carries resolutions of a video image supported by the UE 1 in a receiving direction and resolutions of a video image supported by the UE 1 in a sending direction. As shown in FIG. 7, the resolutions supported by the UE 1 in the receiving direction include 180^{∗}320, 360^{∗}640, and 480^{∗}640, and the resolutions supported by the UE 1 in the sending direction include 180^{∗}320 and 360^{∗}640.

702: After receiving the invite message, the first session border controller SBC 1 processes the invite message based on the resolutions supported by the UE 1 that are carried in the invite message and resolutions supported by the SBC 1, to obtain an updated invite message. The SBC 1 sends the updated invite message to a second terminal UE 2 via a second session border controller SBC 2.

The first session border controller SBC 1 supports super-resolution. The processing the invite message includes adding super-resolution capability indication information supported by the first session border controller to the invite message. The SBC 1 sends the updated invite message to the second terminal UE 2 via the second session border controller SBC 2.

703: The second terminal UE 2 sends a first session progress response message to the second session border controller SBC 2.

The UE 2 makes a response based on the indication in the invite message that the SBC 1 supports in enhancing the resolution from 180^{∗}320 to 360^{∗}640 through super-resolution in the receiving direction. The first session progress response message carries information indicating that the UE 2 supports a low resolution 180^{∗}320 in a sending direction, and supports 180^{∗}320 and 360^{∗}640 in a receiving direction.

704: After receiving the first session progress response message, the second session border controller SBC 2 processes the first session progress response message to obtain a second session progress response message, and forwards the second session progress response message to the first session border controller SBC 1.

After receiving the first session progress response message, the second session border controller SBC 2 may learn, based on an updated packet, that the SBC 1 supports the super-resolution. Because the SBC 2 also supports the super-resolution, the SBC 2 selects the lower resolution 180^{∗}320 for the sending direction of the SBC 2, and selects 180^{∗}320 and 360^{∗}640 for the receiving direction of the SBC 2, and the SBC 2 sends the second session progress response message to the SBC 1.

705: The first session border controller SBC 1 processes the second session progress response message to obtain a third session progress response message, and sends the third session progress response message to the first terminal UE 1.

The SBC 1 supports the super-resolution, and determines that a highest resolution 360^{∗}640 is selected for the sending direction. Because the SBC 1 cannot determine which resolution of a video image sent by the UE 1 is, the SBC 1 selects resolutions 180^{∗}320 and 360^{∗}640 for the receiving direction of the SBC 1.

706: The first terminal UE 1 sends an update message to the UE 2 to complete the video transmission negotiation processing.

The UE 1 selects a low resolution 180^{∗}320 for sending. The UE 1 completes the video transmission negotiation processing by sending the update message.

A negotiation result is that the UE 1 sends a low-resolution video image to the SBC 2, and the SBC 2 may send a high-resolution video image to the UE 2. In addition, the UE 2 may send the low-resolution video image to the SBC 1, and the SBC 1 may send the high-resolution video image to the UE 2.

The foregoing embodiment is described only via an example in which the session border controller supports the super-resolution. In combination, a terminal side may alternatively support the super-resolution. For example, the UE 1 supports the super-resolution, or the UE 2 supports the super-resolution, or both the UE 1 and the UE 2 support the super-resolution. This is not specifically limited in this solution.

A current technology does not define how a calling side of both parties of a call notifies a peer end whether the calling side uses different resolutions in a receiving direction and a sending direction. This application defines an optional re-negotiation process. In other words, when negotiation is performed between the UE 1 and the UE 2, the UE 1 can determine a resolution in a sending direction of the UE 1 only after sending the negotiation twice. Step 506 in FIG. 5, step 606 in FIG. 6, and step 706 in FIG. 7 are all re-negotiation processes. If the negotiation method is used, the second negotiation increases consumption on a signaling plane.

Based on this, an embodiment of this application further provides a negotiation method, where negotiation is performed based on asymmetry capability indication information. The asymmetry capability indication information indicates, for example, that a first terminal supports different resolutions or different rates in a receiving direction and a sending direction. As shown in Table 2, when UE supports asymmetric video-codec or video-profile, the UE supports different resolutions used in uplink and downlink. When the UE supports asymmetric audio-codec, the UE supports different rates in uplink and downlink.

**Table 2**

| Parameter | video-size | audio-codec | audio-mode-set-R/S | video-codec | video-profile |
|---|---|---|---|---|---|
| Meaning | Video image resolution | Audio encoding and decoding | Audio super-resolution rate set | Video encoding and decoding | Video profile set |

Specifically, when the UE is capable of using different resolutions in the receiving direction and the sending direction, the asymmetry capability indication information may be expressed as a=asymmetry-capability: video-size.

When the UE supports the different resolutions and different audio encoding and decoding rates in the receiving direction and the sending direction, the asymmetry capability indication information may be expressed as: a=asymmetry-capability: video-size&audio-mode-set-R/S.

The asymmetry capability indication information may be added to an SDP of a SIP packet.

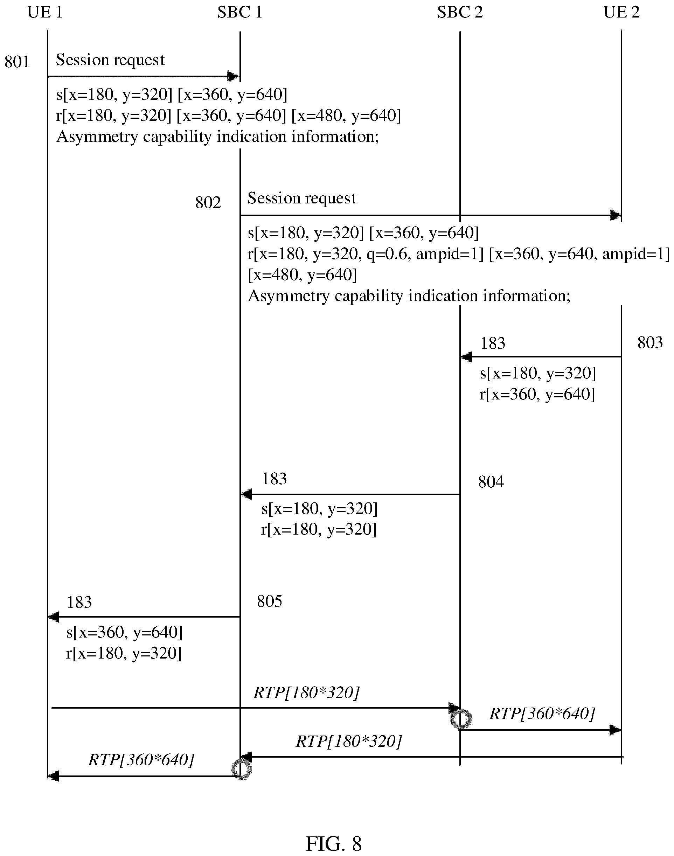

Specifically, based on the foregoing asymmetry capability indication information, steps of video transmission negotiation processing may be simplified. For example, session border controllers on a calling side and a called side both support super-resolution. As shown in FIG. 8, the video transmission negotiation processing includes steps 801 to 805, which are specifically as follows:
801: User equipment UE 1 sends a packet to a first session border controller SBC 1 to initiate a video session request. The packet carries resolutions of all video images supported by the UE 1 in a receiving direction and resolutions of all video images supported by the UE 1 in a sending direction, and further carries asymmetry capability indication information indicating that the UE 1 is capable of using different resolutions in the receiving direction and the sending direction.

The UE 1 notifies, using a=asymmetry-capability: video-size in an SDP in an initial invite message, the SBC 1 and a peer end that the UE 1 supports using different resolutions in the receiving direction and the sending direction.

802: After receiving the packet, the first session border controller SBC 1 processes the packet based on the resolutions supported by the UE 1 that are carried in the packet and resolutions supported by the SBC 1, to obtain an updated packet. The SBC 1 sends the updated packet to a second terminal UE 2 via a second session border controller SBC 2.

The first session border controller SBC 1 supports super-resolution. The processing the packet includes adding super-resolution capability indication information supported by the first session border controller to the packet. The SBC 1 sends the updated packet to the second terminal UE 2 via the second session border controller SBC 2.

803: The second terminal UE 2 sends a first session progress response message to the second session border controller SBC 2.

The UE 2 determines a sending capability of the UE 2 based on a recv parameter in the received packet. Because 180^{∗}320 is recommended, the UE 2 selects the resolution 180^{∗}320 in a 183 message for a sending direction. In addition, because the UE 2 also supports an asymmetry capability, and the UE 2 also knows that the UE 1 supports the asymmetry capability, the UE 2 selects 360^{∗}640 for a receiving direction. The UE 2 does not support a super-resolution capability. Therefore, the UE 2 does not carry an ampid parameter in the 183 message.

804: After receiving the first session progress response message, the second session border controller SBC 2 processes the first session progress response message to obtain a second session progress response message, and forwards the second session progress response message to the first session border controller SBC 1.

After receiving the first session progress response message, the second session border controller SBC 2 may learn, based on the updated packet, that the SBC 1 supports the super-resolution. Because the SBC 2 also supports the super-resolution, the SBC 2 selects the lower resolution 180^{∗}320 for a sending direction of the SBC 2, and also selects the lower resolution 180^{∗}320 for a receiving direction of the SBC 2. The SBC 2 sends the second session progress response message to the SBC 1.

805: The first session border controller SBC 1 processes the second session progress response message to obtain a third session progress response message, and sends the third session progress response message to the first terminal UE 1.

The SBC 1 supports the super-resolution, and determines that a highest resolution 360^{∗}640 is selected for the sending direction. Because the SBC 1 learns that the UE 1 supports the asymmetry capability, the SBC 1 selects a resolution 180^{∗}320 for the receiving direction of the SBC 1.

In the negotiation method, a step of re-negotiating by the UE 1 to determine a resolution for a sending direction of the UE 1 is omitted. This improves a resolution negotiation mechanism of the video call, simplifies a procedure, and saves bandwidth resources of air interfaces and bandwidth resources of a bearer network.

The foregoing embodiments are described using video transmission as an example. An embodiment of this application further provides an audio transmission method. That is, a lower-quality audio is restored to a higher-quality audio through data calculation for transmission.

An audio transmission method may include:
A first session border controller receives first audio sent by a second session border controller.

The first session border controller performs super-resolution processing on the first audio to obtain second audio, where a bit rate of the second audio is higher than a bit rate of the first audio.

The first session border controller sends the second audio to a first terminal.

In embodiments of this application, the first session border controller processes a received low bit rate audio, converts the low bit rate audio into a high bit rate audio, and then sends the high bit rate audio to a terminal. This method changes an existing audio call's bandwidth requirement from using a same bandwidth in both uplink and downlink to using a smaller bandwidth in uplink and a larger bandwidth in downlink, so that an audio call service model matches resource allocation of wireless traffic. This saves resources and reduces carriers' costs.

The audio transmission method may further include:
The second session border controller receives third audio sent by the first session border controller.

The second session border controller performs super-resolution processing on the third audio to obtain fourth audio, where a bit rate of the fourth audio is higher than a bit rate of the third audio.

The second session border controller sends the fourth audio to a second terminal.

For the audio transmission method, refer to the related descriptions of the video transmission method in FIG. 1. Details are not described herein again.

Before the audio transmission processing is performed, the method further includes audio transmission negotiation processing.

AMR codec is multi-rate codec. For example, AMR-WB supports nine rates: 0: 6.60 kbps, 1: 8.85 kbps, 2: 12.65 kbps, 3: 14.25 kbps, 4: 15.85 kbps, 5: 18.25 kbps, 6: 19.85 kbps, 7: 23.05 kbps, and 8: 23.85 kbps.

When the AMR codec is used, which of the nine rates may be specified using a mode-set parameter. For example, when 6.60 kbps, 12.65 kbps, 18.25 kbps, and 23.85 kbps are used in an expression, the expression is as follows:
a=rtpmap: 97 AMR-WB; and
a=fmtp: 97 mode-set=0, 2, 5, 8.

When audio transmission is supported, two fields need to be added: audio-mode-set-R and audio-mode-set-S, which are used to describe a capability in a receiving direction and a capability in a sending direction.

For example, a=fmtp: 97 mode-set=0, 2, 5, 8; asymmetry-capability: audio-mode-set-R [2, 8], and audio-mode-set-S[2, 8]
represents that rate/bit rate super-resolution between 12.65 kbps and 23.85 kbps is supported in both directions.

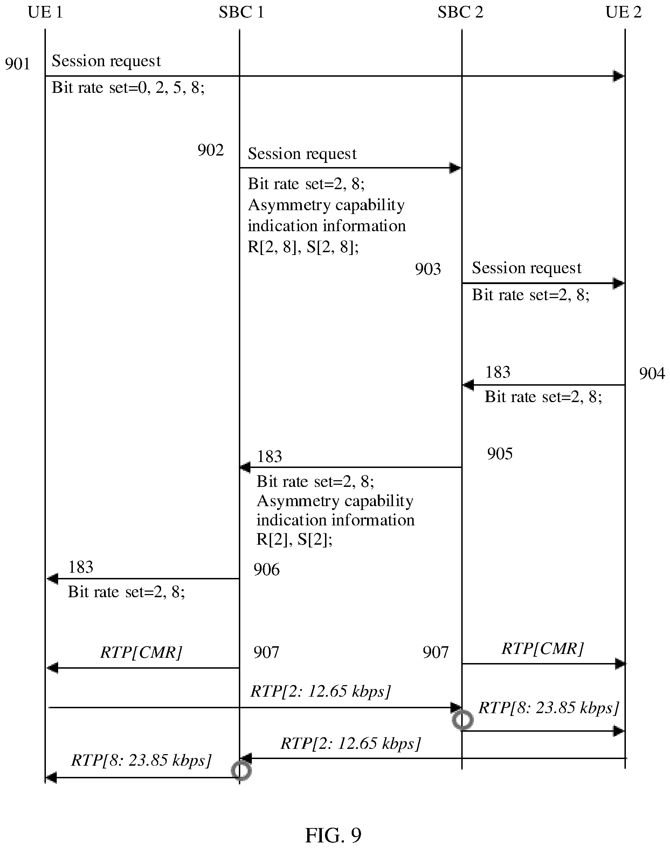

That session border controllers on both a calling side and a called side support super-resolution is used as an example. As shown in FIG. 9, the audio transmission negotiation processing may include the following procedure:
901: UE 1 sends an invite packet to a network to indicate the network to initiate audio call.

902: An SBC 1 supports an AMR-WB super-resolution technology, and notifies a remote end through descriptions in an SDP that the SBC 1 supports an increase from 12.65 kbps to 23.85 kbps in both a sending direction and a receiving direction. The SBC 1 changes a mode-set in the SDP from [0, 2, 5, 8] to a super-resolution capability set [2, 8].

903: The SBC 2 also supports the AMR-WB super-resolution technology, and may delete asymmetry-capability parameter.

904: UE 2 selects to notify the network that the UE 2 agrees to use the two rates 12.65 and 23.85 through a 183 message.

905: The SBC 2 knows that the SBC 1 supports super-resolution of 12.65 and 23.85, and the SBC 2 also supports the super-resolution of the two rates. Therefore, the SBC 2 uses the asymmetry-capability parameter to indicate a peer end to use 12.65 in the receiving and sending directions. Mode-set=2, 8 responded by the UE 2 is notified to the SBC 1 with the 183 message.

906: Because the UE 1 does not carry the asymmetry-capability parameter, the SBC 1 deletes the asymmetry-capability parameter from the SDP.

907: The SBC 1 and the SBC 2 use CMR indication of RTP to notify the UE 1 and the UE 2 to adjust a transmission rate to 12.65.

Through the foregoing audio transmission negotiation, it is obtained that: The UE 1 may send audio with a low codec rate to the SBC 2 for super-resolution processing, so that the SBC 2 may send audio with a high codec rate to the UE 2. In addition, the UE 2 may send the audio with the low codec rate to the SBC 1 for super-resolution processing, so that the SBC 1 may send the audio with the high codec rate to the UE 1.

In embodiments of this application, the audio transmission negotiation is performed before audio transmission processing, so that receiving, super-resolution processing, and sending of audio are performed based on a bit rate obtained through negotiation. This improves reliability of implementing an audio transmission technology.

In addition, the first session border controller processes a received low bit rate audio, converts the low bit rate audio into a high bit rate audio, and then sends the high bit rate audio to the terminal. This method changes an existing audio call's bandwidth requirement from using a same bandwidth in both uplink and downlink to using a smaller bandwidth in uplink and a larger bandwidth in downlink, so that an audio call service model matches resource allocation of wireless traffic. This saves resources and reduces carriers' costs.

An embodiment of this application further provides a video transmission system, including:
a receiving module, configured to receive a first video image sent by the second session border controller;
a processing module, configured to perform super-resolution processing on the first video image to obtain a second video image, where a resolution of the second video image is higher than a resolution of the first video image; and
a sending module, configured to send the second video image to a first terminal.

An embodiment of this application further provides an audio transmission system, including:
a receiving module, configured to receive first audio sent by the second session border controller;
a processing module, configured to perform super-resolution processing on the first audio to obtain second audio, where a bit rate of the second audio is higher than a bit rate of the first audio; and
a sending module, configured to send the second audio to a first terminal.

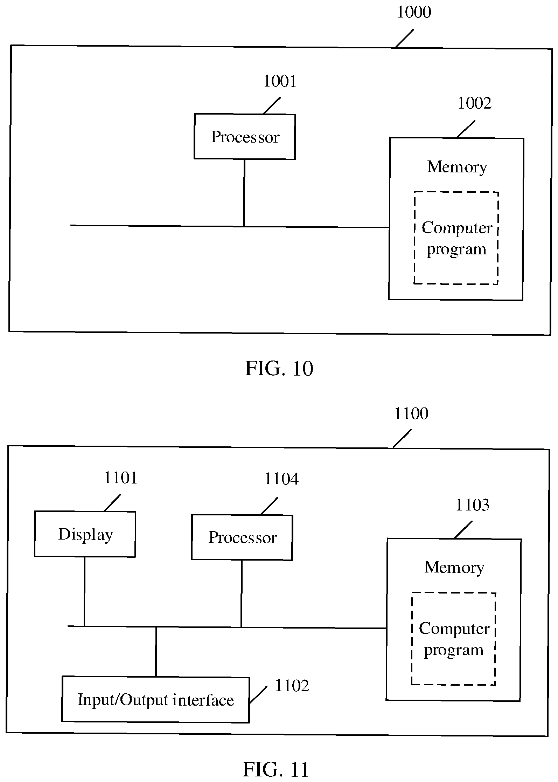

FIG. 10 is a schematic diagram of a structure of a video transmission device according to an embodiment of this application. As shown in FIG. 10, the video transmission device 1000 includes a processor 1001 and a memory 1002 that are coupled to each other. The memory 1002 stores computer program code. The processor 1001 invokes and executes the computer program code in the memory 1002, so that the video transmission device 1000 is enabled to perform the video transmission method provided in the foregoing embodiment.

Specifically, the video transmission device 1000 may be configured to:
receive a first video image sent by a second session border controller; perform super-resolution processing on the first video image to obtain a second video image, where a resolution of the second video image is higher than a resolution of the first video image; and send the second video image to a first terminal.

The video transmission device 1000 may be further configured to:
receive first audio sent by the second session border controller; perform super-resolution processing on the first audio to obtain second audio, where a bit rate of the second audio is higher than a bit rate of the first audio.

FIG. 11 is a schematic diagram of a structure of a terminal according to an embodiment of this application. As shown in FIG. 11, the terminal 1100 includes a display 1101, an input/output interface 1102, and a memory 1103 and a processor 1104 that are coupled to each other. The memory 1103 stores computer program code, and the processor 1104 invokes and executes the computer program code in the memory 1103, so that the terminal 1100 is enabled to perform a multimedia data transmission method.

Specifically, the terminal 1100 may be configured to:
send a multimedia request message to a network side device, where the multimedia request message carries asymmetry capability indication information, and the asymmetry capability indication information indicates that a first terminal supports different bit rates or resolutions in a receiving direction and a sending direction;
receive a multimedia response message sent by the network side device, where the multimedia response message carries an uplink resolution and a downlink resolution or an uplink bit rate and a downlink bit rate; and
send uplink multimedia data using the uplink resolution or the uplink bit rate, and receive downlink multimedia data transmitted using the downlink resolution or the downlink bit rate.

The multimedia request message is an invite message, and the asymmetry capability indication information is in an SDP field of the invite message.

The multimedia request message is an RTCP packet, and the RTCP packet carries the asymmetry capability indication information.

In a possible solution, the multimedia request message is an SPS packet, and the SPS packet carries the asymmetry capability indication information.

In a possible solution, the network side device receives the multimedia request message of the terminal, and determines, based on the asymmetry capability indication information carried in the multimedia request message, the uplink resolution and the downlink resolution or the uplink bit rate and the downlink bit rate that are used by the terminal to transmit the multimedia data. Then, the network side device sends the multimedia response message to the terminal, where the multimedia response message carries the uplink resolution and the downlink resolution or the uplink bit rate and the downlink bit rate that are used to transmit the multimedia data.

In a possible solution, the network side device is a first SBC.

In a possible solution, the multimedia data is audio data or video data.

Further, the terminal 1100 may be configured to:
receive a second video image sent by a first session border controller, where the second video image is obtained by the first session border controller by performing super-resolution processing on a first video image. The first video image is sent by a second session border controller to the first session border controller, and a resolution of the second video image is higher than a resolution of the first video image.

The terminal 1100 may be further configured to:
receive a fourth video image sent by the second session border controller, where the fourth video image is obtained by the second session border controller by performing super-resolution processing on a third video image. The third video image is sent by the first session border controller to the second session border controller, and a resolution of the fourth video image is higher than a resolution of the third video image.

Further, the terminal 1100 may be configured to:
receive a first packet sent by the first session border controller, where the first packet carries a resolution of a video image used in a sending direction of the first session border controller, so that the first terminal receives a video image sent by the first session border controller. The resolution of the video image used in the sending direction of the first session border controller is the resolution of the second video image.

The terminal 1100 may be further configured to:
receive a second packet that is sent by the second session border controller and that carries the super-resolution capability indication information; send a video image that meets the super-resolution capability indication information to the second session border controller, where a resolution of the video image that meets the super-resolution capability indication information is the resolution of the first video image.

An embodiment of this application further provides a computer-readable storage medium. The computer-readable storage medium stores instructions. When the instructions are run on a computer or a processor, the computer or the processor is enabled to perform one or more steps in any one of the foregoing methods.

An embodiment of this application further provides a computer program product including instructions. When the computer program product is run on a computer or a processor, the computer or the processor is enabled to perform one or more steps in any one of the foregoing methods.

All or some of the foregoing embodiments may be implemented by using software, hardware, firmware, or any combination thereof. When software is used to implement the embodiments, all or a part of the embodiments may be implemented in a form of a computer program product. The computer program product includes one or more computer instructions. When the computer program instructions are loaded and executed on the computer, the procedure or functions according to embodiments of this application are all or partially generated. The computer may be a general-purpose computer, a dedicated computer, a computer network, or other programmable apparatuses. The computer instruction may be stored in a computer-readable storage medium, or may be transmitted by using the computer-readable storage medium. The computer instructions may be transmitted from a website, computer, server, or data center to another website, computer, server, or data center in a wired (for example, a coaxial cable, an optical fiber, or a digital subscriber line) or wireless (for example, infrared, radio, or microwave) manner. The computer-readable storage medium may be any usable medium accessible by the computer, or a data storage device, for example, a server or a data center, integrating one or more usable media. The usable medium may be a magnetic medium (for example, a floppy disk, a hard disk drive, or a magnetic tape), an optical medium (for example, a DVD), a semiconductor medium (for example, a solid-state disk (solid-state disk, SSD)), or the like.

A person of ordinary skill in the art may understand that all or some of the processes of the methods in embodiments may be implemented by a computer program instructing related hardware. The program may be stored in a computer-readable storage medium. When the program runs, the processes of the methods in embodiments are performed. The foregoing storage medium includes any medium that can store program code, such as a ROM, a random access memory RAM, a magnetic disk, or an optical disc.

The foregoing descriptions are merely specific implementations of embodiments of this application, but are not intended to limit the protection scope of embodiments of this application. Any variation or replacement within the technical scope disclosed in embodiments of this application shall fall within the protection scope of embodiments of this application. Therefore, the protection scope of embodiments of this application shall be subject to the protection scope of the claims.

## Claims

1. A video transmission method, comprising:
receiving, by a first session border controller, a first video image sent by a second session border controller;
performing, by the first session border controller, super-resolution processing on the first video image to obtain a second video image, wherein a resolution of the second video image is higher than a resolution of the first video image; and
sending, by the first session border controller, the second video image to a first terminal.

2. The method according to claim 1, further comprising:
receiving, by the second session border controller, a third video image sent by the first session border controller;
performing, by the second session border controller, super-resolution processing on the third video image to obtain a fourth video image, wherein a resolution of the fourth video image is higher than a resolution of the third video image; and
sending, by the second session border controller, the fourth video image to a second terminal.

3. The method according to claim 1 or 2, further comprising:
receiving, by the first session border controller, a third video image sent by the first terminal; and
sending, by the first session border controller, the third video image to the second session border controller.

4. The method according to any one of claims 1 to 3, wherein before the receiving, by a first session border controller, a first video image sent by a second session border controller, the method further comprises:
sending, by the first session border controller, a first packet to the first terminal, wherein the first packet carries a resolution of a video image used in a sending direction of the first session border controller, to indicate the first terminal to receive a video image sent by the first session border controller, wherein the resolution of the video image used in the sending direction of the first session border controller is the resolution of the second video image.

5. The method according to claim 4, wherein the method further comprises:
sending, by the second session border controller, a second packet that carries super-resolution capability indication information to the second terminal, to indicate the second terminal to send a video image that meets the super-resolution capability indication information, wherein a resolution of the video image that meets the super-resolution capability indication information is the resolution of the first video image.

6. The method according to claim 5, wherein the second packet is a SIP packet, and the super-resolution capability indication information is in an image attribute parameter of the SIP packet.

7. The method according to claim 5, wherein the second packet is an RTCP packet, the RTCP packet comprises a name field, and when the name field corresponds to a first preset value, that the RTCP packet carries the super-resolution capability indication information is indicated.

8. The method according to claim 5, wherein the second packet is an SPS packet, and the super-resolution capability indication information is in a parameter of the SPS packet.

9. The method according to claim 5, wherein the second packet further carries asymmetry capability indication information, and the asymmetry capability indication information indicates that the first terminal supports different resolutions in a receiving direction and a sending direction.

10. A video transmission device, comprising a memory and a processor that are coupled to each other, wherein the memory stores computer program code, and the processor invokes and executes the computer program code in the memory, to enable the video transmission device to perform the video transmission method according to any one of claims 1, 3, and 4.

11. A video transmission system, comprising a first session border controller and a second session border controller, wherein the first session border controller is configured to:
receive a first video image sent by the second session border controller;
perform super-resolution processing on the first video image to obtain a second video image, wherein a resolution of the second video image is higher than a resolution of the first video image; and
send the second video image to a first terminal.

12. A computer-readable storage medium, wherein the computer-readable storage medium stores a computer program, and when the computer program is executed by a processor, the method according to any one of claims 1 to 9 is implemented.
